# EUROPEAN PATENT SPECIFICATION

(11) **EP 2 202 094 B1**
(45) Date of publication and mention of the grant of the patent: **16.01.2013**
(21) Application number: 09178634.3
(22) Date of filing: 10.12.2009
(51) Int. Cl.: B60C 9/26

(54) **Offset zigzag belt structure for a pneumatic tire**
Versetzte Zickzackgürtelstruktur für Luftreifen
Structure de courroie en zigzag décalé pour pneu

(30) Priority: 19.12.2008 US 339546
(43) Date of publication of application: 30.06.2010
(73) Proprietor: The Goodyear Tire & Rubber Company, Akron, OH 44316-0001 (US)
(72) Inventor: Krier, Roland Willibrord, 6834, Biwer (LU); Mathonet, Vincent Benoit, 6720, Habay-la-Neuve (BE)
(74) Representative: Kutsch, Bernd

(56) References cited:
- EP-A1- 1 477 333
- EP-A1- 2 199 106
- EP-A1- 2 202 095
- EP-A2- 0 332 449
- EP-A2- 1 518 666

## Description

### Field of the Invention

This invention relates to a pneumatic tire having a carcass and a belt reinforcing structure, and, more particularly, to a heavy load radial ply tire having a carcass and a high strength belt structure.

### Background of the Invention

In a conventional pneumatic tire, a large number of belt plies, which stiffen the crown area, are sandwiched on top of one another and are susceptible to cracks inside the belt layers. These cracks may subsequently grow both axially and radially outward, causing a sudden cut/peel off and scattering of the belt/tread during operation.

In one conventional tire, zigzag belt layers have been utilized for the radially inner belt layers with the cord angles progressively increasing from the radially inner belt layers toward the radially outer belt layers. Thus, inner belt plies may contain cords extending substantially in a zigzag path at a cord angle of 5 degrees to 15 degrees in the circumferential direction with respect to the equatorial plane, while being bent at both sides, or lateral edges, of the plies. Each of the outer belt plies may contain cords having a cord angle B larger than the cord angle A of the inner belt plies.

In another conventional tire, each of the side end portions between adjoining inner zigzag belt plies is provided with a further extra laminated portion of a strip continuously extending in the circumferential direction. Further, the extra laminated portions may be sandwiched one upon another in the radial direction. It has been found that the circumferential rigidity of this tire in the vicinity of the lateral edge of each ply end or tread edge is locally increased in this manner so that the radial growth in the vicinity of the tread edge portion during running at high speed may be reduced.

Still another conventional tire has a carcass and a composite belt reinforcing structure having a pair of radially outer zigzag layers and a spirally wound belt layer with cords inclined at an inclination of 5 degrees or less in the circumferential direction with respect to the equatorial plane and located radially inward of, and adjacent to, the radially outer zigzag belt layers. The radially outer zigzag belt layers have cords inclined at 5 degrees to 30 degrees in the circumferential direction with respect to the equatorial plane and extending in alternation to turnaround points at each lateral edge of the belt layer. At each turnaround point, the cords are folded or preferably bent to change direction across the crown of the carcass thus forming a zigzag cord path. The radially inner zigzag belt layers are positioned between the carcass and the spirally wound belt layer. Each of the radially inner zigzag belt layers has cords wound at an inclination of 5 degrees to 30 degrees in the circumferential direction with respect to the equatorial plane and extending in alternation to turnaround points at each lateral edge of the belt layers.

EP-A- 0 332 449 describes a strip-like reinforcing laminate which has at least two laminated strips each containing wave-like or zigzag reinforcing elements.

EP-A- 1 477 333 shows a pneumatic radial tire comprising a belt layer comprising a strip arranged in a wavy pattern.

EP-A- 1 518 666 describes a tire comprising a belt structure wherein a layer of the belt structure is manufactured by applying a multicord reinforced strip in a zigzag pattern extending from one belt layer edge to the other belt layer edge.

### Summary of the Invention

The invention relates to a tire according to claim 1.

Dependent claims refer to preferred embodiments of the invention. According to one aspect of the present invention, the first amplitude is greater than the second amplitude.

According to one aspect of the present invention, the first zigzag layer, the second zigzag layer, and the circumferential spirally wound layer are formed from a continuous strip of material.

The first and second zigzag belt layers comprise cords inclined with respect to the equatorial plane, at an angle within the range of from 3.0 to 8.5 degrees. The cord angle of the first zigzag belt layer is different of the cord angle of the second zigzag belt layer.

According to a preferred aspect of the invention, the tire is a radial truck tire.

The first and second zigzag layer are preferably disposed radially adjacent or radially spaced with only the circumferential spirally wound layer inbetween.

### Definitions

"Axial" and "axially" mean lines or directions that are parallel to the axis of rotation of the tire.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Ply" means a continuous layer of rubber-coated parallel cords.

"Radial" and "radially" mean directions radially toward or away from the axis of rotation of the tire.

"Radial-ply tire or radial tire" means a belted or circumferentially-restricted pneumatic tire in which the ply cords which extend from bead to bead are laid at cord angles between 65-90 degrees with respect to the equatorial plane of the tire.

"Zigzag belt reinforcing structure" means at least two layers of cords or a ribbon of parallel cords preferably having 2 to 20 cords in each ribbon and laid up in an alternating pattern and preferably extending at an angle between of 2-30 degrees between lateral edges of the belt layers.

### Brief Description of the Drawings

FIG. 1 is a schematic sectional view of part of a tire according to the present invention;
FIG. 2 is a schematic perspective view of a zigzag belt layer during formation in accordance with the present invention;
FIG. 3 is a schematic radial view of part of two circumferentially offset zigzag belt layers in accordance with the present invention;
FIG. 4 is a schematic enlarged radial view of an example of part of one of the zigzag belt layers of FIG. 3;
FIG. 5 is a schematic enlarged radial view of another example of part of one of the zigzag belt layers of FIG. 3; and
FIG. 6 is a schematic radial view a zigzag belt layer in accordance with the present invention.

### Detailed Description of an Example Embodiment the Invention

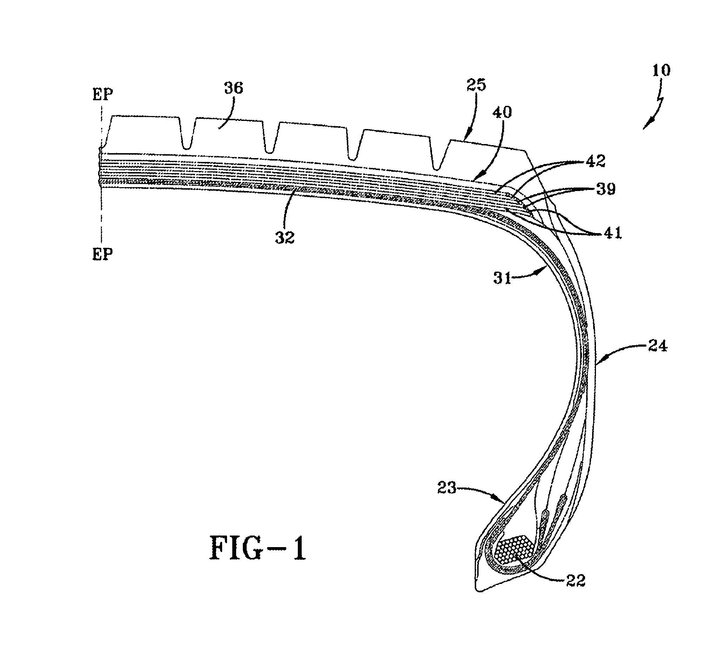

As shown in the half cross-section of FIG. 1, an example radial tire 10 in accordance with the present invention includes two bead portions 23 (one shown) each with a bead core 22 embedded therein, two sidewall portions 24 (one shown) extending radially and slightly axially outward from each of the bead portions 23 in the radial direction of the tire, and a cylindrical tread portion 25 extending between radially outer ends of the sidewall portions 24. The tire 10 is reinforced by a carcass 31 toroidally extending from one bead portion 23 to the other bead portion 23 (not shown).

The carcass 31 may include at least one carcass ply 32 (FIG. 1). The carcass ply 32 may wind around each bead core 22 from inside of the tire 10 away from the equatorial plane EP to form turnup portions. A tread pattern 36 is arranged radially outside of the carcass 31.

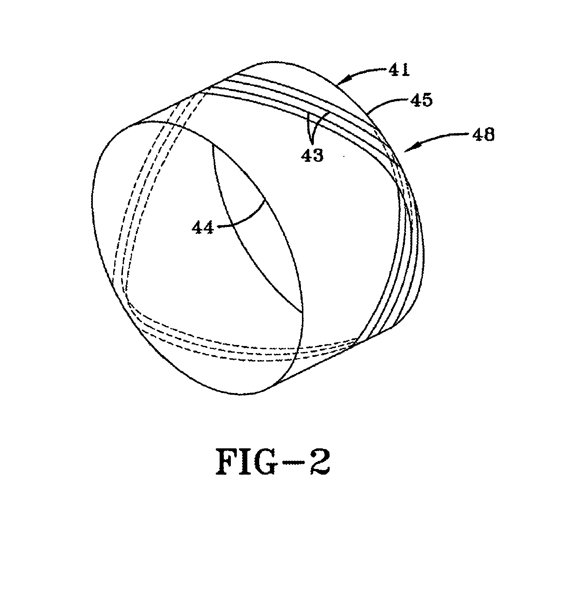

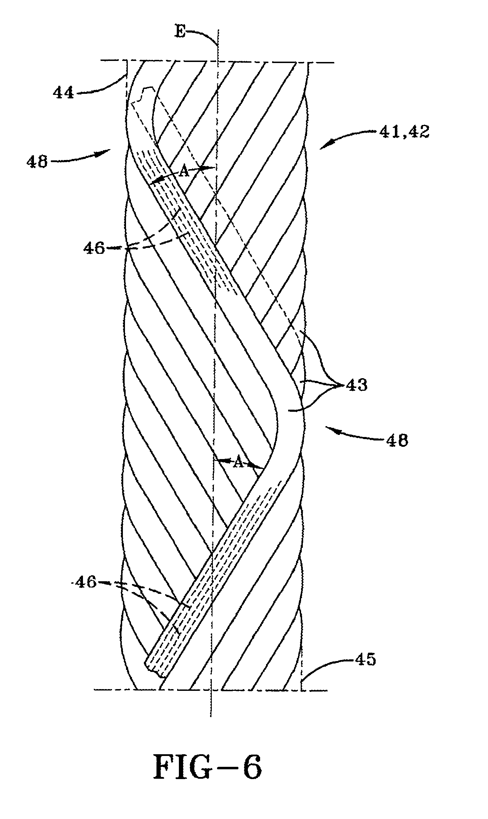

A belt structure 40 is arranged between the carcass 31 and the tread portion 25. The belt structure 40, according to an example embodiment of the present invention, comprises an inner belt layer 41 preferably disposed radially adjacent the carcass 31 and an outer belt layer 42 preferably disposed radially adjacent the tread portion 25. As shown in FIGS. 2 and 6, multiple plies of the inner belt layer 41 may be formed by winding a rubberized strip 43 of one or more steel or aramid cords 46 around a drum in a generally circumferential direction while being angled to extend between side ends, or lateral edges 44, 45, of the inner belt layer thereby forming a zigzag path.

The rubberized strip 43 may be further wound many times while the strip is preferably shifted approximately a width of the strip in the circumferential direction so as not to form a gap between adjoining strips 43. As a result, the cords 46 extend substantially zigzag in the circumferential direction while changing the bending direction at a turnaround point 48 at both lateral edges 44, 45. The cords 46 may be further embedded uniformly throughout the inner belt layer 41. Moreover, the cords 46 may overlap one another such that multiple plies of the inner belt layer 41 are formed while crossing the cords 46 with each other.

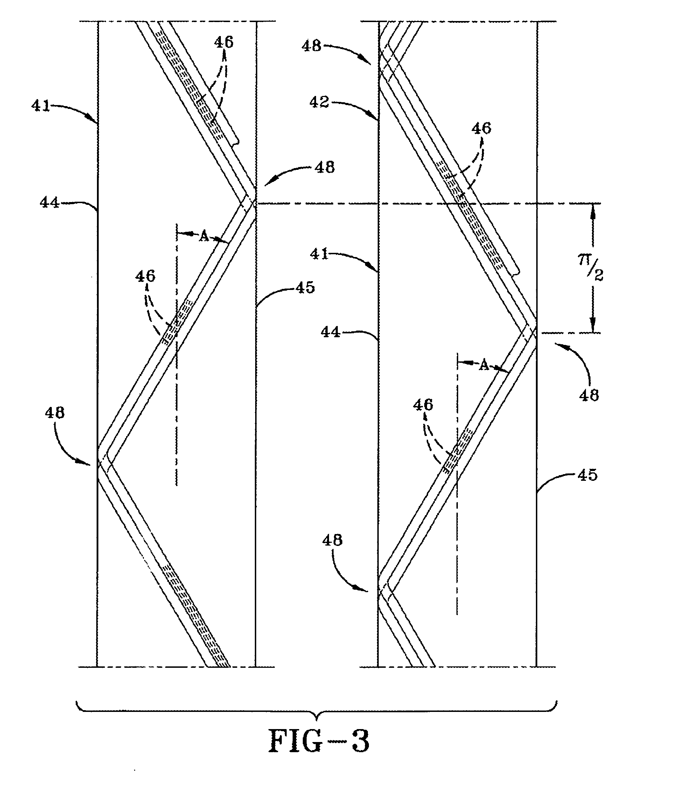

Similarly, as shown in FIG. 3, multiple plies of the radially outer belt layer 42 may be formed by the same method. The width of the outer belt layer 42, or the amplitude of the zigzag pattern of the outer belt layer, may be the same, less or more than the width/amplitude of the inner belt layer 41. Optionally, interposed between the inner belt layer 41 and outer belt layer 42 may be a circumferential, spirally wound layer 39 (FIG. 1) of a strip comprising cords 46, the cords being wound at an angle of plus or minus 5 degrees or less relative to the equatorial plane EP of the tire 10. The cords may be steel, aramid or nylon cords.

The cords 46 of the inner belt layer 41 and outer belt layer 42 may cross with each other at a cord angle A of 2 degrees to 16 degrees, or more specifically 3.0 degrees to 8.5 degrees such as 5 degrees or 6.54 degrees, with respect to the equatorial plane EP of the tire 10 when the strip 43 is reciprocated at least once between both lateral edges 44, 45 of the inner layer within every 360 degrees of the circumference of the tire, as shown in FIG. 3.

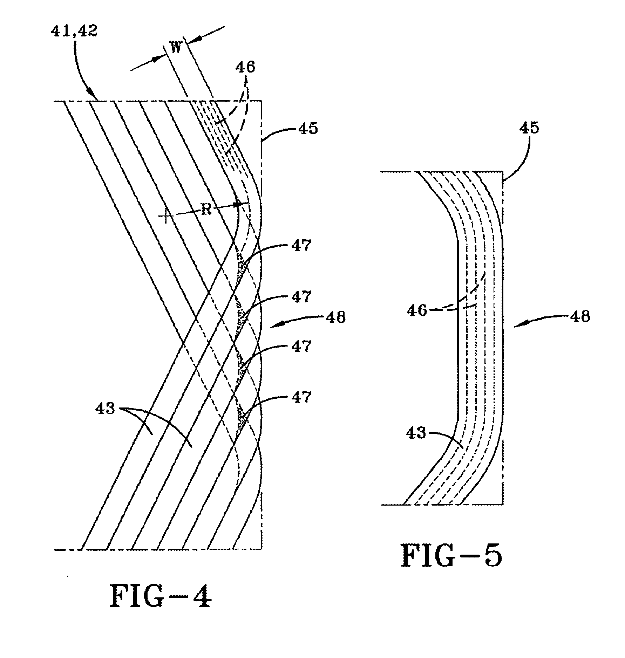

If the cord 46 was a nylon cord and the compressive strain would exceed 25%, cord fatigue could result. However, when a ratio of R/W (R is a radius of curvature (mm) of the strip 43 at the side lateral edges 44, 45 of the inner belt layer 41, and W is a width (mm) of the strip 43) is 2.0 or greater, as shown in FIG. 4, compressive strain in the cord 46 may not exceed 25%. Therefore, when the inner belt layer 41 is formed by using a rubberized strip 43 containing plural steel or aramid cords 46 therein, for example, it may be desirable that the value of R/W is not less than 2.0, preferably not less than 3. The width W of the strip 43 may be in the range of 5 mm to 25 mm, preferably 5 mm to 15 mm, or more specifically in the range of 12 mm to 14 mm.

In addition to a case where the strip 43 is bent at both side lateral edges 44, 45 of the inner belt layer 41 in an arc configuration, as shown in FIG. 4, the strip may have a straight portion extending along the side lateral edge 44 or 45 and an arc portion located at each end of a straight portion (FIG. 5). Here too, it is desirable that the value of R/W in the arc portion not be less than 2.0, preferably not less than 3. Further, when the strip 43 is wound while being bent with a given radius of curvature R at both side lateral edges 44, 45 of the inner belt layer 41, a zone 47 forming a bent triangle may be formed, as shown in FIG. 4, and repeatedly created in the circumferential direction.

In the example embodiment, the layers 41, 39, and 42 may all be formed from a continuous strip 43 that simply forms the radially inner zigzag layer(s) 41 and then continues to form the at least one spirally wound layer 39 and then continues on to form the radially outer zigzag layer(s) 42. Alternatively, the spirally wound layer(s) 39 could be formed as a separate layer from another strip 43. This alternative permits the cords 46 to be of different size or even of different materials from the inner and outer zigzag layers 41, 42 (i.e., a steel inner layer and an aramid outer layer).

The circumferential, spirally wound layer 39, between the inner and outer zigzag layers 41, 42, may reduce the circumferential growth of the tire 10, not only in the lateral edges 44, 45, but also the crown area of the tread pattern 36. Thus, the circumferential, spirally wound layer 39, by resisting growth in the crown area of the tire 10, may greatly reduce cut propensity due to foreign object damage and also reduce tread cracking, particularly under the tread grooves.

In order to further improve uniformity, footprint shape, high load capability and durability, and wear evenness, as shown in FIG. 3, the pattern of the outer zigzag layer 42 is circumferentially offset, or out of phase, from the inner zigzag layer 41, for example by π/2 radians (or 90 degrees rotation of the drum of FIG. 2). This offset reduces the number of strips 46 overlapping each other at the lateral edges of the layers 41, 42 thereby reducing the thickness created by the layers at the edges of the tread 25. This, in turn, results in a more uniform belt structure 40 by mitigating concentrations of zero degree portions in the strips 46 and reducing latent stress/wire tension in the strips at the edges of the tread 25. Additional wedges (not shown) may also be disposed between the layers 41, 42 in order to further reduce stress.

## Claims

1. A pneumatic tire having a carcass (31) and a belt reinforcing structure (40), the belt reinforcing structure (40) comprising a first zigzag belt layer (41) having a first amplitude or layer width and a first wavelength wherein the first zigzag belt layer (41) is formed by winding a continuous strip extending in a zigzag pattern between lateral edges of the first zigzag belt layer (41), and a second zigzag belt layer (42) having a second amplitude or layer width and a second wavelength wherein the second zigzag belt layer (42) is formed by winding a continuous strip extending in a zigzag pattern between lateral edges of the second zigzag belt layer (42), wherein the pattern of the first zigzag belt layer (41) is circumferentially offset from the pattern of the second zigzag belt layer (42), and wherein the first zigzag belt layer (41) comprises cords (46) inclined an amount in the range of 3.0 to 8.5 degrees relative to the equatorial plane (EP) and the second zigzag layer (42) comprises cords (46) inclined an amount in the range of from 3.0 to 8.5 degrees relative to the equatorial plane (EP), **characterized in that** the angle of inclination of the cords (46) in the first layer (41) is different from the angle of inclination of the cords (46) in the second layer (42).

2. The pneumatic tire of claim 1 wherein the angle of inclination of the cords (46) in the first layer (41) is at least 0.5 degrees different from the angle of inclination of the cords (46) in the second layer (42).

3. The pneumatic tire of claim 1 wherein the angle of inclination of the cords (46) in the first layer (41) is more than 1 degree different from the angle of inclination of the cords (46) in the second layer (42).

4. The pneumatic tire of at least one of the previous claims wherein the first zigzag layer (41) and the second zigzag layer (42) are each formed of a strip of material having a width (W) In a range of from 5 to 20 mm.

5. The pneumatic tire of claim 4 wherein the first zigzag layer (41) and the second zigzag layer (42) are each formed of a strip of material having a width (W) in a range of from 10 to 15 mm.

6. The pneumatic tire of at least one of the previous claims wherein the first amplitude or first layer width and the second amplitude or second layer width are the same.

7. The pneumatic tire of at least one of the previous claims wherein the first amplitude and the second amplitude are different.

8. The pneumatic tire of at least one of the previous claims wherein the first amplitude and the second amplitude are at least 5 mm different or at least 70% of the width (W) of the strip (43) such as 70% to 200% of the width (W) of the strip (43) different.

9. The pneumatic tire of at least one of the previous claims further including a circumferential spirally wound layer (39) interposed between the first zigzag layer (41) and the second zigzag layer (42).

10. The pneumatic tire of at least one of the previous claims further including a circumferential spirally wound layer (39) radially above the first zigzag layer (41) and the second zigzag layer (42).

11. The pneumatic tire of at least one of the previous claims 1 to 9 further including a circumferential spirally wound layer (39) radially below the first zigzag layer (41) and the second zigzag layer (42).

12. The pneumatic tire of claim 9, 10 or 11 wherein the circumferential spirally wound layer (39) comprises cords inclined an amount in the range of from 0 to 5 degrees relative to an equatorial plane (EP) of the pneumatic tire.

13. The pneumatic tire of claim 12 wherein the circumferential spirally wound layer (39) comprises cords inclined an amount in the range of from 0 to 2 degrees relative to an equatorial plane (EP) of the pneumatic tire.

14. The pneumatic tire of at least one of the previous claims wherein the first zigzag layer (41) is disposed radially inward of the second zigzag layer (42).

15. The pneumatic tire of at least one of the previous claims wherein the first zigzag layer (41), the second zigzag layer (42), and the circumferential spirally (39) wound layer are formed from a single continuous strip of material.

## Patentansprüche

1. Luftreifen mit einer Karkasse (31) und einer Gürtelverstärkungsstruktur (40), wobei die Gürtelverstärkungsstruktur (40) eine erste Zickzack-Gürtellage (41) mit einer ersten Amplitude oder Lagenbreite und einer ersten Wellenlänge umfasst, wobei die erste Zickzack-Gürtellage (41) durch Wickeln eines kontinuierlichen Streifens gebildet wird, der sich in einem Zickzackmuster zwischen Seitenkanten der ersten Zickzack-Gürtellage (41) erstreckt, und eine zweite Zickzack-Gürtellage (42) mit einer zweiten Amplitude oder Lagenbreite und einer zweiten Wellenlänge umfasst, wobei die zweite Zickzack-Gürtellage (42) durch Wickeln eines kontinuierlichen Streifens gebildet wird, der sich in einem Zickzackmuster zwischen Seitenkanten der zweiten Zickzack-Gürtellage (42) erstreckt, wobei das Muster der ersten Zickzack-Gürtellage (41) in Umfangsrichtung von dem Muster der zweiten Zickzack-Gürtellage (42) versetzt ist, und wobei die erste Zickzack-Gürtellage (41) Korde (46) umfasst, die um einen Betrag im Bereich von 3,0 bis 8,5 Grad bezüglich der Äquatorebene (EP) geneigt sind, und die zweite Zickzack-Gürtellage (42) Korde (46) umfasst, die um einen Betrag im Bereich von 3,0 bis 8,5 Grad bezüglich der Äquatorebene (EP) geneigt sind, **dadurch gekennzeichnet, dass** der Neigungswinkel der Korde (46) in der ersten Lage (41) verschieden von dem Neigungswinkel der Korde (46) in der zweiten Lage (42) ist.

2. Luftreifen nach Anspruch 1, wobei der Neigungswinkel der Korde (46) in der ersten Lage (41) um mindestens 0,5 Grad verschieden von dem Neigungswinkel der Korde (46) in der zweiten Lage (42) ist.

3. Luftreifen nach Anspruch 1, wobei der Neigungswinkel der Korde (46) in der ersten Lage (41) um mehr als 1 Grad verschieden von dem Neigungswinkel der Korde (46) in der zweiten Lage (42) ist.

4. Luftreifen nach mindestens einem der vorgenannten Ansprüche, wobei die erste Zickzacklage (41) und die zweite Zickzacklage (42) jede aus einem Materialstreifen mit einer Breite (W) in einem Bereich von 5 bis 20 mm gebildet sind.

5. Luftreifen nach Anspruch 4, wobei die erste Zickzacklage (41) und die zweite Zickzacklage (42) jede aus einem Materialstreifen mit einer Breite (W) in einem Bereich von 10 bis 15 mm gebildet sind.

6. Luftreifen nach mindestens einem der vorgenannten Ansprüche, wobei die erste Amplitude oder erste Lagenbreite und die zweite Amplitude oder zweite Lagenbreite dieselbe sind.

7. Luftreifen nach mindestens einem der vorgenannten Ansprüche, wobei die erste Amplitude und die zweite Amplitude verschieden sind.

8. Luftreifen nach mindestens einem der vorgenannten Ansprüche, wobei die erste Amplitude und die zweite Amplitude um mindestens 5 mm verschieden sind oder um mindestens 70% der Breite (W) des Streifens (43), wie etwa 70% bis 200% der Breite (W) des Streifens (43), verschieden.

9. Luftreifen nach mindestens einem der vorgenannten Ansprüche, weiter eine in Umfangsrichtung spiralförmig gewickelte Lage (39) beinhaltend, die zwischen die erste Zickzacklage (41) und die zweite Zickzacklage (42) eingefügt ist.

10. Luftreifen nach mindestens einem der vorgenannten Ansprüche, weiter eine in Umfangsrichtung spiralförmig gewickelte Lage (39) radial über der ersten Zickzacklage (41) und der zweiten Zickzacklage (42) beinhaltend.

11. Luftreifen nach mindestens einem der vorgenannten Ansprüche 1 bis 9, weiter eine in Umfangsrichtung spiralförmig gewickelte Lage (39) radial unter der ersten Zickzacklage (41) und der zweiten Zickzacklage (42) beinhaltend.

12. Luftreifen nach Anspruch 9, 10 oder 11, wobei die in Umfangsrichtung spiralförmig gewickelte Lage (39) Korde umfasst, die um einen Betrag im Bereich von 0 bis 5 Grad bezüglich einer Äquatorebene (EP) des Luftreifens geneigt sind.

13. Luftreifen nach Anspruch 12, wobei die in Umfangsrichtung spiralförmig gewickelte Lage (39) Korde umfasst, die um einen Betrag im Bereich von 0 bis 2 Grad bezüglich einer Äquatorebene (EP) des Luftreifens geneigt sind.

14. Luftreifen nach mindestens einem der vorgenannten Ansprüche, wobei die erste Zickzacklage (41) radial einwärts von der zweiten Zickzacklage (42) angeordnet ist.

15. Luftreifen nach mindestens einem der vorgenannten Ansprüche, wobei die erste Zickzacklage (41), die zweite Zickzacklage (42) und die in Umfangsrichtung spiralförmig (39) gewickelte Lage aus einem einzigen kontinuierlichen Materialstreifen gebildet sind.

## Revendications

1. Bandage pneumatique possédant une carcasse (31) et une structure de renforcement de ceinture (40), la structure de renforcement de ceinture (40) comprenant une première couche de ceinture en zigzag (41) possédant une première amplitude ou une première largeur de couche et première longueur d'onde, la première couche de ceinture en zigzag (41) étant obtenue en enroulant une bande continue s'étendant sous la forme d'un motif en zigzag entre des bords latéraux de la première couche de ceinture en zigzag (41) et une deuxième couche de ceinture en zigzag (42) possédant une deuxième amplitude ou une deuxième largeur de couche et une deuxième longueur d'onde, la deuxième couche de ceinture en zigzag (42) étant obtenue en enroulant une bande continue s'étendant sous la forme d'un motif en zigzag entre les bords latéraux de la deuxième couche de ceinture en zigzag (42), dans lequel le motif de la première couche de ceinture en zigzag (41) est décalé en direction circonférentielle du motif de la deuxième couche de ceinture en zigzag (42) et dans lequel la première couche de ceinture en zigzag (41) comprend des câblés (46) inclinés en formant un angle dans la plage de 3,0 à 8,5° par rapport au plan équatorial (EP) et la deuxième couche de ceinture en zigzag (42) comprend des câblés (46) inclinés en formant un angle dans la plage de 3,0 à 8,5 degrés par rapport au plan équatorial (EP), **caractérisé en ce que** l'angle d'inclinaison des câblés (46) dans la première couche (41) est différent de l'angle d'inclinaison des câblés (46) dans la deuxième couche (42).

2. Bandage pneumatique selon la revendication 1, dans lequel l'angle d'inclinaison des câblés (46) dans la première couche (41) est différent à concurrence d'au moins 0,5 degré de l'angle d'inclinaison des câblés (46) dans la deuxième couche (42).

3. Bandage pneumatique selon la revendication 1, dans lequel l'angle d'inclinaison des câblés (46) dans la première couche (41) est différent à concurrence de plus de 1 degré de l'angle d'inclinaison des câblés (46) dans la deuxième couche (42).

4. Bandage pneumatique selon au moins une des revendications précédentes, dans lequel la première couche en zigzag (41) et la deuxième couche en zigzag (42) sont chacune réalisées à partir d'une bande de matière dont la largeur (W) se situe dans la plage de 5 à 20 mm.

5. Bandage pneumatique selon la revendication 4, dans lequel la première couche en zigzag (41) et la deuxième couche en zigzag (42) sont chacune réalisées à partir d'une bande de matière dont la largeur (W) se situe dans la plage de 10 à 15 mm.

6. Bandage pneumatique selon au moins une des revendications précédentes, dans lequel la première amplitude ou la première largeur de couche et la deuxième amplitude ou la deuxième largeur de couche sont identiques.

7. Bandage pneumatique selon au moins une des revendications précédentes, dans lequel la première amplitude et la deuxième amplitude sont différentes.

8. Bandage pneumatique selon au moins une des revendications précédentes, dans lequel la première amplitude et la deuxième amplitude sont différentes à concurrence d'au moins 5 mm ou à concurrence d'au moins 70 % de la largeur (W) de la bande (43), par exemple différentes à concurrence de 70 % à 200 % de la largeur (W) de la bande (43).

9. Bandage pneumatique selon au moins une des revendications précédentes, englobant en outre une couche circonférentielle (39) enroulée en spirale qui vient s'intercaler entre la première couche en zigzag (41) et la deuxième couche en zigzag (42).

10. Bandage pneumatique selon au moins une des revendications précédentes, englobant en outre une couche circonférentielle (39) enroulée en spirale qui vient se disposer au-dessus de la première couche en zigzag (41) et de la deuxième couche en zigzag (42).

11. Bandage pneumatique selon au moins une des revendications précédentes 1 à 9, englobant en outre une couche circonférentielle (39) enroulée en spirale qui vient se disposer en dessous de la première couche en zigzag (41) et de la deuxième couche en zigzag (42).

12. Bandage pneumatique selon la revendication 9, 10 ou 11, dans lequel la couche circonférentielle (39) enroulée en spirale comprend des câblés inclinés en formant un angle de 0,5 degré par rapport au plan équatorial (EP) du bandage pneumatique.

13. Bandage pneumatique selon la revendication 12, dans lequel la couche circonférentielle (39) enroulée en spirale comprend des câblés inclinés en formant un angle de 0 à 2 degrés par rapport au plan équatorial (EP) du bandage pneumatique.

14. Bandage pneumatique selon au moins une des revendications précédentes, dans lequel la première couche en zigzag (41) vient se disposer à l'intérieur de la deuxième couche en zigzag (42) en direction radiale.

15. Bandage pneumatique selon au moins une des revendications précédentes, dans lequel la première couche en zigzag (41), la deuxième couche en zigzag (42) et la couche circonférentielle (39) enroulée en spirale sont réalisées à partir d'une seule bande continue de matière.
